(19) **Europäisches Patentamt**
**European Patent Office**
**Office européen des brevets**

(11) **EP 3 638 910 B1**

(12) **FASCICULE DE BREVET EUROPEEN**

(45) Date de publication et mention de la délivrance du brevet:
**03.05.2023  Bulletin 2023/18**

(21) Numéro de dépôt: **18749435.6**

(22) Date de dépôt: **14.06.2018**

(51) Classification Internationale des Brevets (IPC):
**F16B 37/14** *(2006.01)*       **F16B 39/08** *(2006.01)*

(52) Classification Coopérative des Brevets (CPC):
**F16B 39/08; F16B 37/14**

(86) Numéro de dépôt international:
**PCT/FR2018/051414**

(87) Numéro de publication internationale:
**WO 2018/229444 (20.12.2018 Gazette 2018/51)**

(54) **FIXATION À VERROUILLAGE POSITIF**

FORMSCHLÜSSIGES BEFESTIGUNGSELEMENT

POSITIVE LOCKING FASTENER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.06.2017  FR 1755416**

(43) Date de publication de la demande:
**22.04.2020  Bulletin 2020/17**

(73) Titulaire: **Lisi Aerospace**
**75012 Paris (FR)**

(72) Inventeurs:
• **ABOU HALIMA, Mohamed**
**92500 Rueil-Malmaison (FR)**
• **MEIFFRE, Loïc**
**78700 Conflans Sainte-Honorine (FR)**

(74) Mandataire: **Lavoix**
**2, place d'Estienne d'Orves**
**75441 Paris Cedex 09 (FR)**

(56) Documents cités:
| | |
|---|---|
| EP-A1- 0 576 871 | FR-A- 615 364 |
| FR-A- 825 722 | FR-A- 1 557 874 |
| JP-U- H01 146 009 | US-A- 2 365 433 |

EP 3 638 910 B1

## Description

DOMAINE TECHNIQUE

L'invention appartient au domaine des fixations mécaniques.

Plus particulièrement, l'invention appartient au domaine des fixations mécaniques à verrouillage positif.

ETAT DE L'ART

Un problème soulevé dans la fixation d'un ensemble structurel par fixations filetées est celui du desserrage en utilisation, généralement conséquence des vibrations. Des dispositifs de verrouillage positif sont mis en oeuvre pour résoudre ce problème.

Il est connu d'utiliser des fils frein pour éviter le desserrage des fixations par vibrations. Un inconvénient de tels fils est qu'ils ne limitent pas suffisamment le relâchement des fixations.

La demande de brevet américain US 5 360 303 décrit un dispositif pour verrouiller un écrou sur une vis. Le dispositif comprend un capuchon placé sur l'écrou et une partie filetée de la vis traversée par un trou radial. Des trous placés sur une circonférence du capuchon permettent d'insérer une goupille à travers le trou radial et des trous du capuchon lorsque ceux-ci sont alignés.

La position relative du capuchon relativement à l'écrou étant limitée à un nombre donné de configurations dépendant d'un nombre de dents formées dans le capuchon pour être engagé sur des pointes de l'écrou, un inconvénient de cette solution est que, malgré un nombre augmenté de positions du capuchon par rapport à l'écrou, l'alignement du trou radial avec l'un des trous du capuchon n'est pas toujours possible, suivant la position de l'écrou après installation de la fixation. Il peut donc être nécessaire de resserrer l'écrou de manière à pouvoir insérer la goupille dans le capuchon et le trou radial, l'écrou n'étant plus alors serré au couple nominal.

La demande de brevet EP0 576 871 A décrit également un dispositif pour verrouiller un écrou sur une vis.

EXPOSE DE L'INVENTION

L'invention se propose de résoudre les problèmes de l'art antérieur.

L'invention concerne un ensemble selon la revendication 1. Un tel ensemble comprend entre autres un capuchon destiné à s'engrener avec un écrou et destiné à recevoir une goupille, ledit écrou comportant une portion de serrage de période angulaire θ autour d'un axe principal dudit écrou, ledit capuchon étant sensiblement de révolution autour d'un axe principal et comportant :

-   une portion de blocage à une première extrémité, ladite portion de blocage déterminant une surface intérieure correspondant à un logement destiné à s'engrener avec la portion de serrage de l'écrou de sorte que l'axe principal dudit écrou est sensiblement confondu avec l'axe principal du capuchon lorsque ledit capuchon est en place sur ledit écrou ;

-   une portion de verrouillage à une seconde extrémité, une paroi latérale de ladite portion de verrouillage comportant au moins une paire d'ouvertures traversantes adaptées pour recevoir la goupille, lesdites ouvertures d'une paire étant agencées symétriquement par rapport à l'axe principal, suivant une direction définie par des centres desdites ouvertures de la paire, les ouvertures étant similaires en dimensions avec une hauteur h suivant la direction de l'axe principal et une longueur définie par un secteur angulaire φ destiné à permettre un mouvement d'une partie rectiligne de la goupille dans n'importe laquelle de l'au moins une paire d'ouvertures, lesdites ouvertures étant situées sensiblement à une même hauteur dudit axe principal ;

lesdites portions de blocage et de verrouillages étant fixes et solidaires entre elles et ledit capuchon étant caractérisé en ce que le secteur angulaire φ est égal à :

$$\varphi = \frac{\theta}{N}$$

où N désigne un nombre de paires d'ouvertures.

Dans une forme de réalisation, la portion de verrouillage comporte au moins deux paires d'ouvertures et les paires d'ouvertures sont disposées de telle sorte que :

-   pour chacune desdites paires d'ouvertures, quelle que soit la position dudit capuchon lorsque celui-ci est en place sur l'écrou, une paire d'ouvertures couvre une même et unique portion d'un secteur angulaire élémentaire, d'amplitude angulaire θ, ladite portion étant associée à une portion du motif élémentaire de la portion de serrage de l'écrou ;

-   une réunion des portions du secteur angulaire élémentaire couvertes par la moitié des ouvertures desdites paires d'ouvertures couvre l'intégralité dudit secteur angulaire élémentaire.

Dans une forme de réalisation, les ouvertures sont des encoches.

Dans une forme de réalisation, les ouvertures sont des trous oblongs.

Dans une forme de réalisation, la portion de blocage et la portion de verrouillage sont raccordées entre elles par une portion de raccordement.

Dans une forme de réalisation, le capuchon comporte un plateau fermant ledit capuchon à la seconde extrémité.

3      **EP 3 638 910 B1**      4

L'invention concerne également, une fixation à verrouillage positif selon la revendication 7.

Dans une forme de réalisation :

- l'écrou est un écrou à douze pans définissant un profil étoilé à douze sommets de période angulaire 30° ;
- le capuchon comporte deux paires d'ouvertures ;
- le secteur angulaire $\varphi$ est égal à 15° ;

Dans une forme de réalisation, la goupille comporte une partie courbe apte à épouser une surface extérieure de la portion de verrouillage du capuchon pour maintenir ladite goupille en place.

Dans une forme de réalisation, la goupille est une goupille à ressort.

Dans une forme de réalisation, une dimension radiale minimale de la première partie de la paroi périphérique est supérieure à une dimension radiale maximale de la portion filetée de la vis.

L'invention concerne également une méthode de mise en oeuvre d'une fixation à verrouillage positif selon l'invention. La méthode selon l'invention comporte les étapes suivantes :

- insertion de la vis dans un trou pratiqué au préalable dans un ensemble structurel constitué d'éléments de structure à maintenir ensemble ;
- mise en place de l'écrou sur la vis par application d'un couple de serrage ;
- mise en place du capuchon sur la portion de serrage de l'écrou ;
- si le trou radial n'est pas aligné avec une paire d'ouvertures du capuchon, retrait du capuchon suivant une direction verticale, rotation du capuchon autour de son axe principal, dans un sens de rotation donné, d'un angle égal à la période angulaire $\theta$, puis remise en place du capuchon ;
- insertion de la goupille dans les ouvertures et trou radial alignés.

BREVE DESCRIPTION DES FIGURES

L'invention sera mieux comprise à la lecture de la description qui suit et à l'examen des figures qui l'accompagnent. Celles-ci ne sont présentées qu'à titre indicatif et nullement limitatif de l'invention.

La figure 1A représente une vue isométrique d'une fixation à verrouillage positif selon l'invention, maintenant un ensemble structurel, dans un exemple de réalisation de l'invention dans lequel le capuchon présente deux paires d'ouvertures.

La figure 1B représente une vue isométrique avec coupe selon le plan (OYZ) du dispositif de verrouillage dans l'exemple de réalisation de la figure 1A.

La figure 2 représente une vue de dessus d'un écrou à douze pans.

La figure 3 représente une vue en section du capuchon selon un plan horizontal médian des trous oblongs de la portion de verrouillage du capuchon dans l'exemple de réalisation de la figure 1A.

La figure 4 représente les secteurs angulaires couverts par deux ouvertures appartenant à deux paires d'ouvertures différentes, dans une forme de réalisation dans laquelle le capuchon présente deux paires d'ouvertures.

La figure 5 représente une vue du capuchon en coupe selon un plan méridien.

Les figures 6a ; 6c ; 6e et 6g représentent des vues en coupe selon un plan horizontal de la vis et de l'écrou dans diverses orientations de l'écrou relativement à la vis.

Les figures 6b ; 6d ; 6f et 6h représentent des vues en coupe selon un plan médian des trous oblongs de la portion de verrouillage du capuchon.

Les figures 7a-7c représentent les jeux d'assemblage entre les divers éléments de la fixation selon l'invention.

La figure 8 représente une vue en section du capuchon selon un plan horizontal médian des trous oblongs de la portion de verrouillage du capuchon dans un exemple de réalisation dans lequel le capuchon présente une seule paire d'ouvertures.

La figure 9 représente une vue en section du capuchon selon un plan horizontal médian des trous oblongs de la portion de verrouillage du capuchon dans un exemple de réalisation dans lequel le capuchon présente trois paires d'ouvertures.

La figure 10 représente une vue isométrique d'un capuchon dans une forme de réalisation dans laquelle les ouvertures du capuchon sont des encoches.

Les figures sont des schémas de principe proposés pour une bonne compréhension de l'invention et ne sont pas nécessairement à l'échelle.

DESCRIPTION DETAILLEE

Dans la description, les termes « horizontal » et « vertical » doivent être interprétés en référence à la configuration des éléments sur les dessins et à un repère orthonormé (O ;X ;Y ;Z) associé.

Une direction « verticale » est donnée par la direction de l'axe (OZ).

Un plan parallèle au plan (OXY) est donc un plan « horizontal » et tout axe d'un tel plan a une direction horizontale.

Dans toute la description, les angles sont exprimés en degrés.

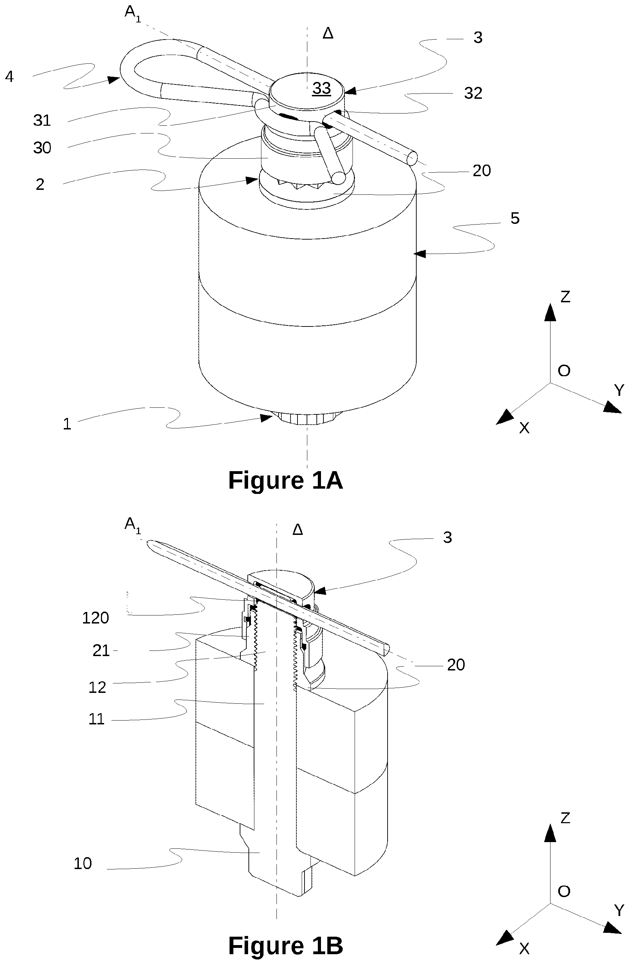

En référence aux figures 1A et 1B, une fixation comprenant une vis 1 et un écrou 2 maintient fixés entre eux deux éléments de structure formant un ensemble structurel 5.

La vis 1 s'étend selon un axe longitudinal $\Delta$ vertical et présente une tête 10, un corps 11 et une portion filetée 12 traversée par un trou radial 120, un axe $A_1$ dudit trou radial étant sécant et perpendiculaire à l'axe longitudinal $\Delta$. Le trou radial 120 est situé dans une portion de la vis 1 dépassant de l'écrou 2 du côté opposé à l'ensemble structurel 5 lorsque l'écrou 2 est mis en place, à proximité d'une extrémité de la vis 1, par exemple à une distance comprise entre 1mm et 1cm de ladite extrémité. Le trou radial 120 est de section adaptée au passage d'une tige de goupille *a priori* cylindrique de section circulaire.

Lorsque la vis 1 est installée, l'écrou 2 est vissé sur la portion filetée 12 de ladite vis avec application d'un couple nominal de serrage, de sorte que les éléments de structure de l'ensemble structurel 5 sont maintenus entre eux par la vis 1 et l'écrou 2 avec la force de prétension voulue.

L'écrou 2 comporte une base 20, en contact avec l'ensemble structurel 5, et une portion de serrage 21 permettant l'application du couple de serrage, au moyen d'un outil comportant une douille de forme complémentaire de ladite portion de serrage.

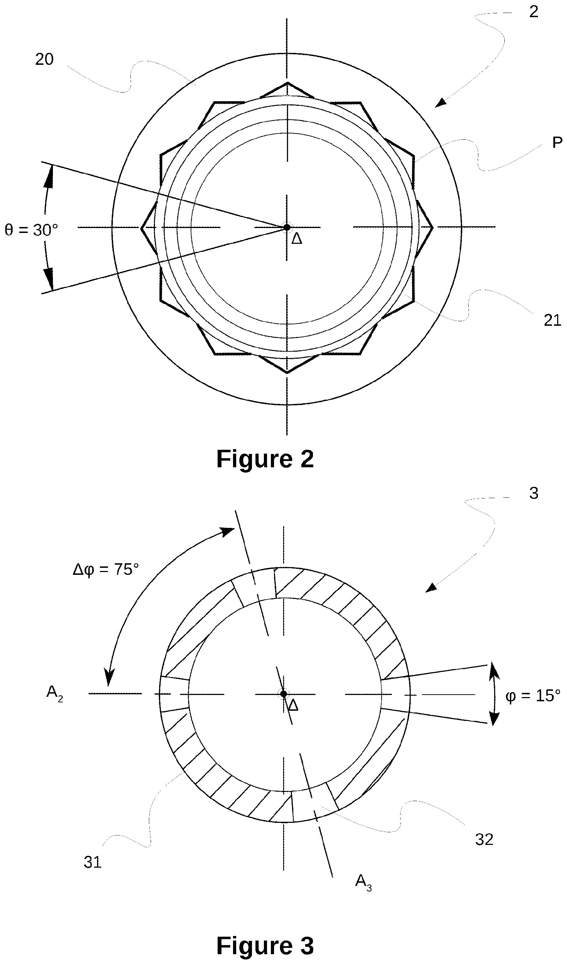

En référence à la figure 2, la portion de serrage 21 présente une face externe définissant, dans un plan horizontal, un profil P en forme d'étoile à douze sommets, représenté en trait plein épais sur la figure, ledit profil présentant ainsi une période angulaire $\theta$ autour d'un axe sensiblement confondu avec l'axe longitudinal $\Delta$ lorsque l'écrou 2 est mis en place. Dans l'exemple de réalisation décrit sur les figures, l'écrou 2 est un écrou à douze pans, et la période angulaire $\theta$ du profil est de 30°.

Après serrage de l'écrou 2 sur la vis 1, un capuchon 3 selon l'invention est installé par-dessus l'écrou 2 et la vis 1.

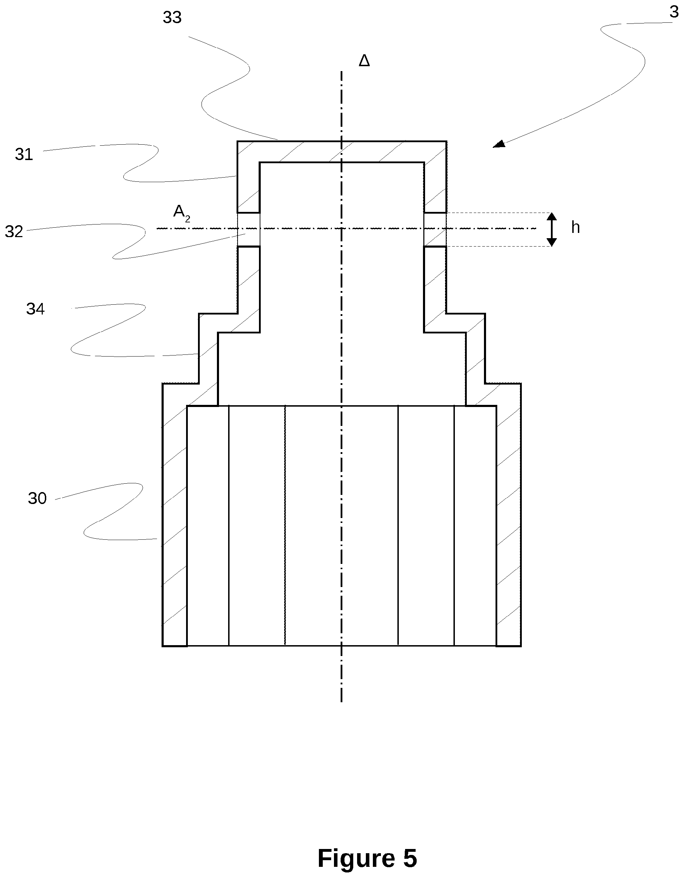

En référence aux figures 3 et 5, le capuchon 3 comporte une portion de blocage 30 à une première extrémité et une portion de verrouillage 31 à une seconde extrémité.

Les portions de blocage 30 et de verrouillage 31 sont fixement solidaires entre elles, le cas échéant au moyen d'une portion de raccordement 34.

Le capuchon 3 détermine une forme en creux sensiblement de révolution autour d'un axe principal, lequel axe principal est sensiblement confondu avec l'axe $\Delta$ de la vis 1 lorsqu'il est mis en place.

La portion de blocage 30 détermine une surface intérieure qui correspond à un logement pour l'écrou 2 sur lequel ledit capuchon est destiné à être placé. Cette surface intérieure présente en outre une forme et des dimensions pour que non seulement la portion de blocage 30 s'engage sur la portion de serrage 21 de l'écrou mais qu'en outre une rotation du capuchon 3 vis-à-vis de l'écrou 2 soit impossible dans la position engagée. Par rotation impossible, il doit être compris sans endommagement du capuchon et dans la limite de jeux nécessaires ou inévitables pour permettre le montage du capuchon compte-tenu des tolérances de fabrication du capuchon 3 et de l'écrou 2.

La portion de blocage 30 présente par exemple une surface intérieure complémentaire de la surface extérieure de la portion de serrage 21 de l'écrou.

Une configuration du capuchon 3 vis-à-vis de l'ensemble portion filetée 12 et de la portion de serrage 21 peut être modifiée en retirant verticalement ledit capuchon, en réalisant une ou plusieurs rotations dudit capuchon autour de l'axe $\Delta$, d'un pas angulaire de 30° égal, dans l'exemple ilustré, à la période angulaire $\theta$ du profil P de la portion de serrage 21, puis en replaçant le capuchon 3 verticalement. Dans l'exemple de réalisation illustré sur les dessins, il existe, de par la périodicité angulaire du profil P, douze positions angulaires possibles du capuchon 3 sur l'écrou 2, qui peuvent être obtenues à partir d'une position angulaire initiale donnée, par onze rotations successives du capuchon 3 d'un pas de 30° (ou de$\theta$ degrés) dans un sens de rotation donné ou dans l'autre.

La portion de verrouillage 31 détermine un volume intérieur dont les dimensions, déterminées par une paroi latérale de ladite portion de verrouillage, sont définies pour contenir une extrémité libre de la vis 1 sur laquelle est placée l'écrou 2.

Dans une forme préférée de réalisation, le volume intérieur de la portion de verrouillage 31 est cylindrique de section circulaire d'axe l'axe principal et d'un diamètre supérieur au diamètre maximal de la portion filetée 12 de la vis 1, par exemple le diamètre maximal de ladite portion filetée augmenté d'un jeu pour placer le capuchon sans effort et sans endommager le capuchon et ou le filet de la vis 1.

Dans la forme de réalisation illustrée sur les figures, la portion de verrouillage 31 comporte un plateau 33 fermant la portion de verrouillage 31 à la seconde extrémité, permettant notamment de rigidifier le capuchon 3 ou d'étanchéifier la fixation. Ce plateau 33 est optionnel, le volume intérieur de la portion de verrouillage 31 pouvant être ouvert.

En outre, en référence à la figure 3, la paroi latérale de la portion de verrouillage 31 comporte deux paires d'ouvertures 32 traversantes (trous ou encoches par exemple). Les ouvertures d'une paire sont agencées symétriquement par rapport à l'axe principal suivant une direction définie par des centres desdites ouvertures de la paire considérée. Ainsi, une première paire détermine une première direction portée par un axe $A_2$ et une seconde paire détermine une seconde direction portée par un axe $A_3$.

En outre, les ouvertures 32 sont toutes situées sensiblement à une même hauteur sur l'axe principal et les axes $A_2$ et $A_3$ forment un angle $\Delta\varphi$. Dans l'exemple illustré, $\Delta\varphi$ est égal à 75° afin de garantir une toile suffisante entre deux ouvertures 32 adjacentes. Selon la matière du capuchon, cet angle peut avoir d'autres valeurs, comme il sera compris par la suite. Dans cet exemple, toutes les ouvertures 32 sont similaires en dimensions et avec une hauteur h suivant la direction de l'axe principal et une longueur définie par un secteur angulaire $\varphi$ dans le plan horizontal médian. Les dimensions des ouvertures 32 sont adaptées pour permettre l'insertion d'une partie rectiligne d'une goupille 4. Le secteur angulaire φ est déterminé par rapport à la période angulaire θ du profil périodique P de la portion de serrage 21 de l'écrou 2, suivant la relation :

$$\varphi = \frac{\theta}{2}$$

Dans l'exemple de réalisation illustré sur les figures, les ouvertures 32 sont des trous oblongs, la période angulaire θ est égale à 30°, le secteur angulaire φ est égal à 15°. Ainsi, les deux ouvertures 32 adjacentes couvrent le même secteur angulaire qu'un pan de l'écrou.

Lorsque le capuchon 3 est placé sur la portion filetée 12 de la vis 1 et la portion de serrage 21 de l'écrou 2, la partie rectiligne de la goupille 4 vient traverser le trou radial 120 et deux ouvertures 32 diamétralement opposées d'une paire d'ouvertures, une partie courbe de la goupille 4 venant en appui sur une surface extérieure de la seconde partie du capuchon 3 pour assurer le maintien de ladite goupille dans ledit capuchon. Une forme de la partie courbe est adaptée de manière à épouser la surface extérieure du capuchon 3. Avantageusement, la goupille employée est une goupille à ressort.

Pour permettre l'insertion de la goupille 4 dans le capuchon 3, il convient que l'axe $A_1$ du trou radial soit sensiblement confondu avec l'un des axes $A_2$ ou $A_3$ des paires d'ouvertures, c'est-à-dire qu'un angle formé par l'axe $A_1$ avec l'un des axes $A_2$ ou $A_3$ soit inférieur ou égal au secteur angulaire φ, égal à θ/2 dans l'exemple illustré.

Le choix des secteurs angulaires φ couverts par les ouvertures 32 et de l'angle Δφ entre des directions des deux paires d'ouvertures 32 est tel que, quelle que soit la position du capuchon sur l'écrou, et aux tolérances de fabrication près, un premier secteur angulaire $\varphi_1$ d'une première paire d'ouvertures se trouve toujours placé en face d'une même première demi-période de 15° d'un pan de l'écrou 2, et le deuxième secteur angulaire $\varphi_2$ de la deuxième paire d'ouvertures 32 se trouve toujours placé en face d'une même deuxième demi-période de 15° d'un pan de l'écrou, la première et la deuxième demi-période couvrant des portions différentes du même motif, et l'ensemble des demi-périodes couvrant un pan de période θ.

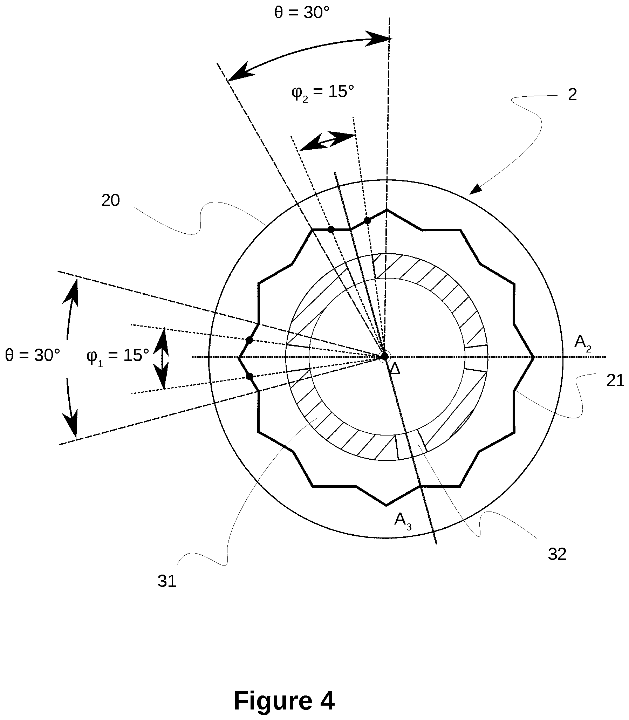

La figure 4 illustre une position relative des ouvertures 32 du capuchon 3 relativement à la portion de serrage 21 de l'écrou 2. Dans une configuration initiale du capuchon 3 vis-à-vis de l'écrou 2, dans l'exemple de réalisation illustré sur la figure 4, , le secteur angulaire cp, de 15° permet de couvrir avec la goupille 4 insérée dans la paire d'ouvertures 32 associée à l'axe $A_2$ un secteur angulaire de 15° correspondant à une première demi-période d'un motif élémentaire du profil P, par exemple une demi-période comprenant le sommet d'un pan de l'écrou. Le deuxième secteur angulaire $\varphi_2$ de 15° correspond à une seconde demi-période dudit motif élémentaire, par exemple la demi-période comprenant un creux d'un pan de l'écrou.

Il est donc possible, par une rotation adaptée du capuchon 3, de trouver une position du capuchon 3 permettant d'aligner sensiblement l'axe $A_1$ avec l'un des axes $A_2$ ou $A_3$ sans modifier la position de l'écrou par rapport au perçage radial de la vis. Les secteurs angulaires φ couverts par les trous 32 ainsi que l'angle Δφ entre les directions des deux paires de trous 32 permettent donc de trouver une position du capuchon 3 permettant l'insertion de la partie rectiligne de la goupille 4 quelle que soit l'orientation relative du trou radial 120 de la vis 1 vis-à-vis de l'écrou 2.

Il convient de noter que ce raisonnement est valable pour d'autres valeurs de l'angle Δφ, par exemple 45°, 105° ou 135°. Ces valeurs correpondent à des multiples entiers impairs, différents de 1, de la demi-période angulaire égale à θ/2. Pour les exemples cités, une rotation de un pas, trois pas ou quatre pas de 30° respectivement permet de couvrir un secteur angulaire élémentaire donné.

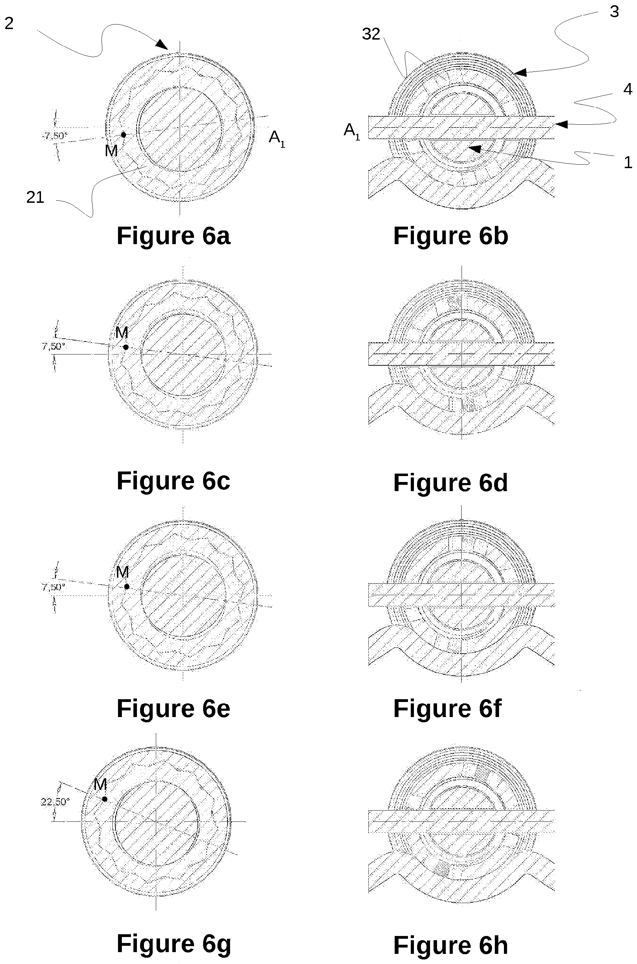

Les figures 6a à 6d montrent les positions extrêmes du capuchon 3 relativement à la goupille 4 pour un angle formé entre la vis 1 et l'écrou 2 variant de -7,5° à 7,5°, cet angle étant défini comme l'ange entre l'axe $A_1$ du trou radial 120 et un axe horizontal coupant l'axe Δ et passant par un point de référence M de la portion de serrage 21. Cette première plage de valeurs peut être couverte entièrement par une première paire d'ouvertures 32.

Les figures 6e à 6h montrent les positions extrêmes du capuchon 3 relativement à la goupille 4 pour un angle formé entre la vis 1 et l'écrou 2 variant de 7,5° à 22,5°. Cette seconde plage de valeurs ne peut être couverte par la première paire d'ouvertures 32, le capuchon 3 est donc tourné d'un seul pas pour que la seconde paire d'ouvertures 32 soit sensiblement alignée avec le trou radial 120. La seconde paire d'ouvertures 32 couvre cette seconde plage de valeurs, et ainsi une plage de 30° a bien été couverte. De par la périodicité du profil de la portion de serrage 21, il est donc possible de mettre en place le capuchon 3 pour n'importe quelle orientation de l'écrou 2 par rapport à la vis 1.

Le capuchon 3 permet le verrouillage de l'écrou 2, et la goupille 4 permet le verrouillage de la vis 1 et du capuchon 3. Le dispositif de verrouillage selon l'invention permet ainsi un verrouillage positif de la fixation, la présence du capuchon 3 et de la goupille 4 permettant de limiter le possible desserrage de l'écrou 2 vis-à-vis de la vis 1.

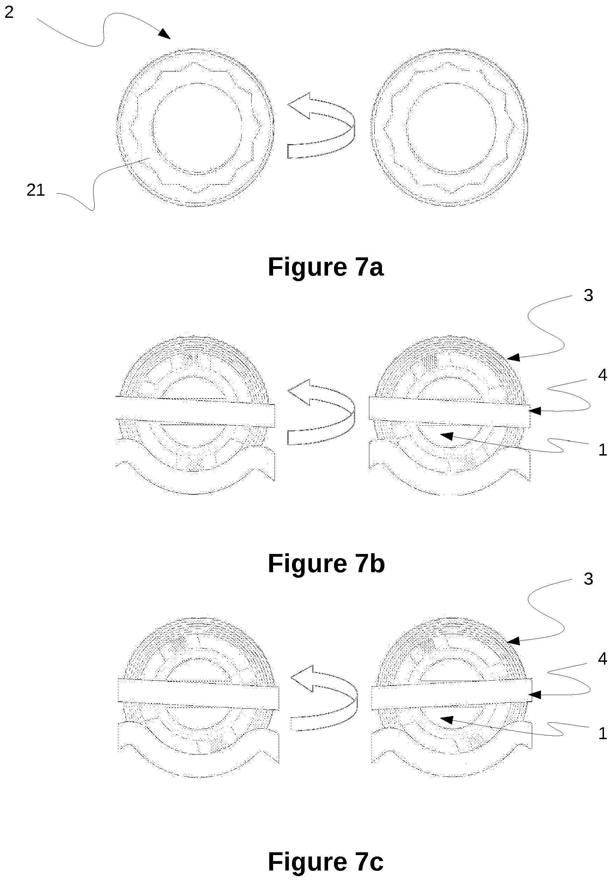

En référence aux figures 7a-7c, il existe des jeux inhérents au montage de la fixation selon l'invention. La figure 7a illustre le jeu angulaire maximal existant entre l'écrou 2 et le capuchon 3. La figure 7b illustre le jeu maximal existant entre la goupille 4 et le capuchon 3. La figure 7c illustre le jeu maximal existant entre la goupille 4 et la vis 1.

En pratique, la fixation selon l'invention présente un desserrage maximal d'environ 27° du fait de l'existence de ces jeux, correspondant à une perte de précontrainte maximale d'environ 9%. On entend par perte de précontrainte maximale la perte de précontrainte dans le scénario le plus pessimiste de desserrage de la fixation, c'est-à-dire un desserrage maximal.

Il convient de noter que ce raisonnement n'est pas limité à l'exemple de réalisation illustré mais peut s'étendre à tout profil P de la portion de serrage 21 présentant une période angulaire θ strictement inférieure à 90°. Un avantage de l'invention est qu'elle permet un verrouillage positif de la fixation sans avoir à modifier le serrage nominal de l'écrou 2 lors de son installation, pour permettre l'alignement du trou radial 120 avec les ouvertures 32 du capuchon 3.

Egalement, ce raisonnement peut être généralisé à un nombre N de paires d'ouvertures 32 supérieur ou égal à 1, le secteur angulaire φ étant alors égal à :

$$\varphi = \frac{\theta}{N}$$

Un angle $\Delta\varphi_p$, où p est un entier compris entre 1 et N-1, entre une direction d'une p-ième paire de trous 32 et une direction d'une paire de trous de référence est tel que :

- pour chacune des paires d'ouvertures 32, quelle que soit la position du capuchon 3 lorsque celui-ci est mis en place sur l'écrou 2, une paire d'ouvertures 32 couvre une même et unique portion d'un secteur angulaire élémentaire d'amplitude angulaire θ, ladite portion étant associée à un portion du motif élémentaire de la portion de serrage 21 de l'écrou 2 ;
- une réunion des portions du secteur angulaire élémentaire couvertes par la moitié des ouvertures desdites paires d'ouvertures couvre l'intégralité dudit secteur angulaire élémentaire.

Pour obtenir ces deux conditions, l'angle entre deux directions de paires d'ouvertures est par exemple de la forme :

$$\Delta\varphi_p = p\left(\theta + \frac{\theta}{N}\right)$$

où 1≤p≤N-1.

Il convient de noter que deux paires d'ouvertures ne doivent pas être séparées d'un angle multiple de la période angulaire θ, sans quoi l'une des deux paires serait redondante, puisque les deux paires d'ouvertures seraient alors associées à une même portion du secteur angulaire élémentaire.

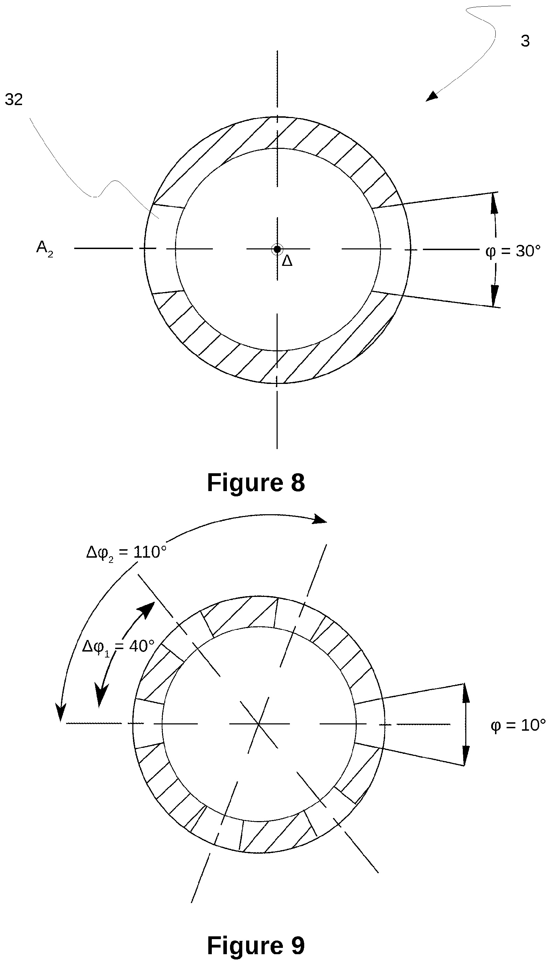

Le nombre de paires d'ouvertures 32 peut par exemple être égal à 1, comme illustré figure 8.

Le nombre de paires d'ouvertures 32 peut également être supérieur ou égal à 3, comme illustré sur la figure 9 représentant un capuchon 3 présentant 3 paires d'ouvertures. Dans cet exemple, la période angulaire θ est de 30°, le secteur angulaire φ est de 10°. Une première paire de trous 32 est séparée d'une paire de trous de référence d'un angle $\Delta\varphi_1$ de 40°. Une seconde paire de trous est séparée d'un angle $\Delta\varphi_2$ de 110° de ladite paire de trous de référence.

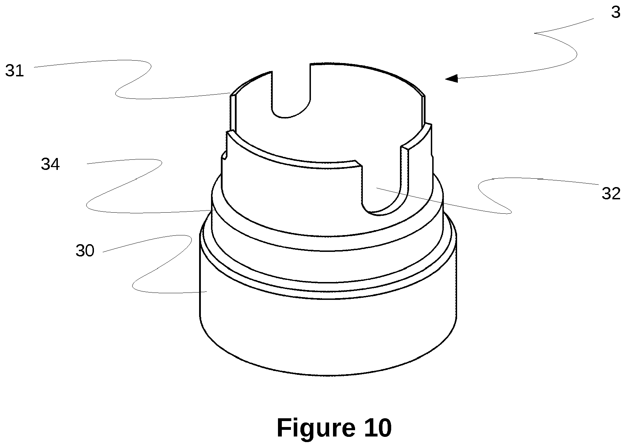

Les ouvertures 32 peuvent également être des encoches, comme illustré sur la figure 10.

## Revendications

1. Ensemble pour la réalisation d'une fixation à verrouillage positif, ledit ensemble comprenant :

   - un écrou (2), ledit écrou comportant une portion de serrage (21) de période angulaire O autour d'un axe principal dudit écrou ; et
   - un capuchon (3) destiné à s'engrener avec l'écrou (2) et destiné à recevoir une goupille (4), ledit capuchon étant sensiblement de révolution autour d'un axe principal et comportant :

      une portion de blocage (30) à une première extrémité, ladite portion de blocage déterminant une surface intérieure correspondant à un logement destiné à s'engrener avec la portion de serrage (21) de l'écrou (2) de sorte que l'axe principal dudit écrou est sensiblement confondu avec l'axe principal du capuchon (3) lorsque ledit capuchon est en place sur ledit écrou ;
      une portion de verrouillage (31) à une seconde extrémité, une paroi latérale de ladite portion de verrouillage comportant au moins une paire d'ouvertures (32) traversantes adaptées pour recevoir la goupille (4), lesdites ouvertures d'une paire étant agencées symétriquement par rapport à l'axe principal, suivant une direction définie par des centres desdites ouvertures de la paire, les ouvertures (32) étant similaires en dimensions avec une hauteur h suivant la direction de l'axe principal et une longueur définie par un secteur angulaire φ destiné à permettre un mouvement d'une partie rectiligne de la goupille (4) dans n'importe laquelle de l'au moins une paire d'ouvertures (32), lesdites ouvertures étant situées sensiblement à une même hauteur dudit axe principal ;
      lesdites portions de blocage et de verrouillages étant fixes et solidaires entre elles et ledit capuchon étant **caractérisé en ce que** le secteur angulaire φ est égal à :

$$\varphi = \Theta / N$$

où N désigne un nombre de paires d'ouvertures.

**2.** Ensemble selon la revendication 1, **caractérisé en ce que** la portion de verrouillage (31) comporte au moins deux paires d'ouvertures (32) et **en ce que** les paires d'ouvertures (32) sont disposées de telle sorte que : pour chacune desdites paires d'ouvertures, quelle que soit la position dudit capuchon lorsque celui-ci est en place sur l'écrou (2), une paire d'ouvertures (32) couvre une même et unique portion d'un secteur angulaire élémentaire, d'amplitude angulaire O, ladite portion étant associée à une portion du motif élémentaire de la portion de serrage (21) de l'écrou (2) ;
une réunion des portions du secteur angulaire élémentaire couvertes par la moitié des ouvertures desdites paires d'ouvertures couvre l'intégralité dudit secteur angulaire élémentaire.

**3.** Ensemble selon la revendication 1 ou la revendication 2, **caractérisé en ce que** les ouvertures (32) sont des encoches.

**4.** Ensemble selon la revendication 1 ou la revendication 2, **caractérisé en ce que** les ouvertures (32) sont des trous oblongs.

**5.** Ensemble selon l'une quelconque des revendications précédentes, **caractérisé en ce que** la portion de blocage (30) et la portion de verrouillage (31) sont raccordées entre elles par une portion de raccordement (34).

**6.** Ensemble selon l'une quelconque des revendications précédentes, **caractérisé en ce qu'**il comporte un plateau (33) fermant ledit capuchon à la seconde extrémité.

**7.** Fixation à verrouillage positif comportant :

- une vis (1) présentant une portion filetée (12) comportant un trou radial (120) traversant ladite portion filetée ;
- un ensemble selon l'une quelconque des revendications 1 à 6,

l'écrou (2) dudit ensemble étant destiné à être mis en place sur la vis (1), la portion de serrage (21) dudit écrou comprenant une surface externe définissant dans un plan horizontal un profil (P) de période angulaire O autour d'un axe principal dudit écrou ;
un volume intérieur de la portion de verrouillage (31) du capuchon dudit ensemble étant de dimensions définies pour contenir une extrémité libre de la vis (1) dépassant de l'écrou (2), ledit capuchon étant par ailleurs destiné à s'engrener avec la portion de serrage (21) de l'écrou (2), la surface intérieure de la portion de blocage (30) formant une empreinte complémentaire du profil (P) de la portion de serrage (21) et le secteur angulaire φ étant égal à une fraction de la période angulaire dudit profil (P) ; et

- une goupille (4) présentant une partie rectiligne destinée à être insérée dans une paire d'ouvertures (32) du capuchon (3) et dans le trou radial (120) de la vis (1), lorsque lesdits trou et ouvertures sont alignés, de sorte à verrouiller la fixation.

**8.** Fixation à verrouillage positif selon la revendication 7, **caractérisée en ce que** :

l'écrou est un écrou à douze pans définissant un profil (P) étoilé à douze sommets de période angulaire 30° ;
le capuchon (3) comporte deux paires d'ouvertures (32) ; le secteur angulaire φ est égal à 15° ;
le décalage angulaire Δφ entre les paires d'ouvertures (32) est égal à 75°.

**9.** Fixation selon la revendication 7 ou la revendication 8, **caractérisée en ce que** la goupille (4) comporte une partie courbe apte à épouser une surface extérieure de la portion de verrouillage (31) du capuchon (3) pour maintenir ladite goupille en place.

**10.** Fixation selon l'une quelconque des revendications 7 à 9, **caractérisée en ce que** la goupille (4) est une goupille à ressort.

**11.** Fixation selon l'une quelconque des revendications 7 à 10, **caractérisée en ce qu'**une dimension radiale minimale de la première partie de la paroi périphérique (31) est supérieure à une dimension radiale maximale de la portion filetée (12) de la vis (1).

**12.** Méthode de mise en oeuvre d'une fixation à verrouillage positif selon l'une quelconque des revendications 7 à 11, **caractérisée en ce qu'**elle comporte les étapes suivantes :

- insertion de la vis (1) dans un trou pratiqué au préalable dans un ensemble structurel (5) constitué d'éléments de structure à maintenir ensemble ;
- mise en place de l'écrou (2) sur la vis par application d'un couple de serrage ;
- mise en place du capuchon (3) sur la portion de serrage (21) de l'écrou (2) ;

- si le trou radial (120) n'est pas aligné avec une paire d'ouvertures (32) du capuchon (3), retrait du capuchon (3) suivant une direction verticale, rotation du capuchon autour de son axe principal, dans un sens de rotation donné, d'un angle égal à la période angulaire O, puis remise en place du capuchon (3) ;
- insertion de la goupille (4) dans les ouvertures (32) et trou radial (120) alignés.

**Patentansprüche**

1. Anordnung zur Herstellung einer formschlüssigen Befestigung, die Anordnung umfassend:

    - eine Mutter (2), die Mutter umfassend einen Klemmabschnitt (21) mit einer Winkelperiode O um eine Hauptachse der Mutter; und
    - eine Kappe (3), die dazu bestimmt ist, mit der Mutter (2) einzugreifen und dazu bestimmt ist, einen Stift (4) aufzunehmen, wobei die Kappe im Wesentlichen um eine Hauptachse drehbar ist und Folgendes umfasst:

        einen Arretierabschnitt (30) an einem ersten Ende, wobei der Arretierabschnitt eine Innenfläche bestimmt, die einem Sitz entspricht, der dazu bestimmt ist, mit dem Klemmabschnitt (21) der Mutter (2) einzugreifen, sodass die Hauptachse der Mutter im Wesentlichen mit der Hauptachse der Kappe (3) zusammenfällt, wenn die Kappe auf die Mutter aufgesetzt ist;
        einen Verriegelungsabschnitt (31) an einem zweiten Ende, eine Seitenwand des Verriegelungsabschnitts umfassend mindestens ein Paar von durchgehenden Öffnungen (32), die angepasst sind, um den Stift (4) aufzunehmen, wobei die Öffnungen eines Paars symmetrisch in Bezug auf die Hauptachse in eine Richtung angeordnet sind, die durch die Mitten der Öffnungen des Paars definiert ist, wobei die Öffnungen (32) von ähnlichen Abmessungen mit einer Höhe h entlang der Richtung der Hauptachse und einer Länge sind, die durch einen Winkelsektor $\varphi$, der dazu bestimmt ist, um eine Bewegung eines geradlinigen Teils des Stifts (4) in einer beliebigen des mindestens einen Paars von Öffnungen (32) zu ermöglichen, wobei die Öffnungen im Wesentlichen auf der gleichen Höhe der Hauptachse angeordnet sind;
        wobei die Arretier- und Verriegelungsabschnitte feststehend und fest miteinander verbunden sind und die Kappe **dadurch gekennzeichnet ist, dass** der Winkelsektor $\varphi$ gleich

$$\varphi = \Theta \, / N$$

ist,
wobei N eine Anzahl von Paaren von Öffnungen bezeichnet.

2. Anordnung nach Anspruch 1, **dadurch gekennzeichnet, dass** der Verriegelungsabschnitt (31) mindestens zwei Paare von Öffnungen (32) umfasst, und dass die Paare von Öffnungen (32) derart angeordnet sind, dass: für jedes der Paare von Öffnungen unabhängig von der Position der Kappe, wenn diese auf der Mutter (2) aufgesetzt ist, ein Paar von Öffnungen (32) denselben und einzigen Abschnitt eines elementaren Winkelsektors mit der Winkelamplitude O abdeckt, wobei der Abschnitt mit einem Abschnitt des elementaren Musters des Klemmabschnitts (21) der Mutter (2) assoziiert ist; eine Vereinigung der Abschnitte des elementaren Winkelsektors, die von der Hälfte der Öffnungen der Paare von Öffnungen abgedeckt werden, den gesamten elementaren Winkelsektor abdeckt.

3. Anordnung nach Anspruch 1 oder 2, **dadurch gekennzeichnet, dass** die Öffnungen (32) Kerben sind.

4. Anordnung nach Anspruch 1 oder Anspruch 2, **dadurch gekennzeichnet, dass** die Öffnungen (32) Langlöcher sind.

5. Anordnung nach einem der vorherigen Ansprüche, **dadurch gekennzeichnet, dass** der Arretierabschnitt (30) und der Verriegelungsabschnitt (31) durch einen Verbindungsabschnitt (34) miteinander verbunden sind.

6. Anordnung nach einem der vorherigen Ansprüche, **dadurch gekennzeichnet, dass** sie eine Platte (33) umfasst, die die Kappe an dem zweiten Ende verschließt.

7. Formschlüssige Befestigung, umfassend:

    - eine Schraube (1), die einen Gewindeabschnitt (12) aufweist, der ein radiales Loch (120) umfasst, das den Gewindeabschnitt durchquert;
    - eine Anordnung nach einem der Ansprüche 1 bis 6,

        wobei die Mutter (2) der Anordnung dazu bestimmt ist, auf die Schraube (1) aufgesetzt zu werden, wobei der Klemmabschnitt (21) der Mutter eine Außenfläche umfasst, die in einer horizontalen Ebene ein Profil (P) mit einer Winkelperiode O um eine Hauptachse der Mutter definiert;
wobei ein Innenvolumen des Verriegelungsabschnitts (31) der Kappe der Anordnung von Abmessungen ist, die definiert sind, um ein freies Ende der Schraube (1) zu enthalten, das aus der Mutter (2) hervorsteht, wobei die genannte Kappe ferner dazu bestimmt ist, mit dem Profil des Klemmabschnitts (21) der Schraube (2), wobei die Innenfläche des Arretierabschnitts (30) eine Vertiefung bildet, die zu dem Profil (P) des Klemmabschnitts (21) komplementär ist und der Winkelsektor φ gleich wie eine Bruchteil der Winkelperiode des Profils (P) ist; und

- einen Stift (4), der einen geraden Teil aufweist, der dazu bestimmt ist, um in ein Paar Öffnungen (32) der Kappe (3) und in das radiale Loch (120) der Schraube (1) eingeführt zu werden, wenn die Löcher und Öffnungen ausgerichtet sind, um die Befestigung zu verriegeln.

**8.** Formschlüssige Befestigung nach Anspruch 7, **dadurch gekennzeichnet, dass**:

die Mutter eine Zwölfkantmutter ist, die ein sternförmiges Profil (P) mit zwölf Scheitelpunkten und einer Winkelperiode von 30° definiert;
die Kappe (3) zwei Paare von Öffnungen (32) umfasst; der Winkelsektor φ gleich 15° ist;
der Winkelversatz Δφ zwischen den Paaren von Öffnungen (32) gleich 75° ist.

**9.** Befestigung nach Anspruch 7 oder Anspruch 8, **dadurch gekennzeichnet, dass** der Stift (4) einen gekrümmten Teil umfasst, der geeignet ist, um an einer Außenfläche des Verriegelungsabschnitts (31) der Kappe (3) anzuliegen, um den Stift in Position zu halten.

**10.** Befestigung nach einem der Ansprüche 7 bis 9, **dadurch gekennzeichnet, dass** der Stift (4) ein Federstift ist.

**11.** Befestigung nach einem der Ansprüche 7 bis 10, **dadurch gekennzeichnet, dass** eine minimale radiale Abmessung des ersten Teils des Verriegelungsabschnitts (31) größer ist als eine maximale radiale Abmessung des Gewindeabschnitts (12) der Schraube (1).

**12.** Verfahren zum Implementieren einer formschlüssigen Befestigung nach einem der Ansprüche 7 bis 11, **dadurch gekennzeichnet, dass** es die folgenden Schritte umfasst:

- Einsetzen der Schraube (1) in ein Loch, das zuvor in einer strukturellen Einheit (5) ausgeführt wurde, die aus Strukturelementen besteht, die zusammengehalten werden sollen;
- Anbringen der Mutter (2) auf der Schraube durch Anwenden eines Drehmoments;
- Aufsetzen der Kappe (3) auf den Klemmabschnitt (21) der Mutter (2);
- wenn das radiale Loch (120) nicht mit einem Paar Öffnungen (32) der Kappe (3) ausgerichtet ist, Entfernen der Kappe (3) in einer vertikalen Richtung, Drehen der Kappe um ihre Hauptachse in einer gegebenen Drehrichtung um einen Winkel, der gleich wie die Winkelperiode O ist, und dann Wiederaufsetzen der Kappe (3);
- Einsetzen des Stifts (4) in die ausgerichteten Öffnungen (32) und das radiale Loch (120).

**Claims**

**1.** An assembly for making a positive locking fastener, said assembly comprising :

- a nut (2), said nut having a tightening portion (21) of angular period Θ about a major axis of said nut; and
- a cap (3) intended to engage with the nut (2) and intended to receive a pin (4), said cap being substantially circular about a main axis and comprising:

a locking portion (30) at a first end, said locking portion determining an inner surface corresponding to a housing for engaging the tightening portion (21) of the nut (2) so that the main axis of said nut is substantially coincident with the main axis of the cap (3) when said cap is in place on said nut;
a locking portion (31) at a second end, a side wall of said locking portion having at least one pair of through apertures (32) adapted to receive the pin (4), said apertures of a pair being arranged symmetrically with respect to the main axis, along a direction defined by centres of said apertures of the pair, the apertures (32) being similar in size with a height h along the direction of the main axis and a length defined by an angular sector φ for allowing movement of a straight portion of the pin (4) in any of the at least one pair of apertures (32), said apertures being located at substantially the same height as said main axis;
said blocking and locking portions being fixed and integral with each other and said cap being **characterized in that** the angular sector (φ) is equal to:

$$\varphi = \Theta \,/N$$

where N denotes a number of pairs of openings.

2.  An assembly according to claim 1, **characterised in that** the locking portion (31) comprises at least two pairs of apertures (32) and **in that** the pairs of apertures (32) are arranged such that : for each of said pairs of apertures, regardless of the position of said cap when it is in place on the nut (2), a pair of apertures (32) covers one and the same portion of an elementary angular sector, of angular amplitude $\Theta$, said portion being associated with a portion of the elementary pattern of the tightening portion (21) of the nut (2);
a combination of the portions of the elementary angular sector covered by half of the apertures of said pairs of apertures covers the whole of said elementary angular sector.

3.  An assembly according to claim 1 or claim 2, **characterised in that** the apertures (32) are notches.

4.  An assembly according to claim 1 or claim 2, **characterised in that** the apertures (32) are oblong holes.

5.  An assembly according to any of the preceding claims, **characterised in that** the blocking portion (30) and the locking portion (31) are connected together by a connecting portion (34).

6.  Assembly according to any of the preceding claims, **characterised in that** it comprises a tray (33) closing said cap at the second end.

7.  Positive locking fastener comprising:

    - a screw (1) having a threaded portion (12) with a radial hole (120) passing through said threaded portion;
    - An assembly according to any of claims 1 to 6,

        the nut (2) of said assembly being intended to be placed on the screw (1), the tightening portion (21) of said nut comprising an external surface defining in a horizontal plane a profile (P) of angular period $\Theta$ about a main axis of said nut;
        an inner volume of the locking portion (31) of the cap of said assembly being of dimensions defined to contain a free end of the screw (1) protruding from the nut (2), said cap being furthermore intended to engage with the tightening portion (21) of the nut (2), the inner surface of the locking portion (30) forming an imprint complementary to the profile (P) of the tightening portion (21) and the angular sector $\varphi$ being equal to a fraction of the angular period of said profile (P); and

        - a pin (4) having a straight portion for insertion into a pair of apertures (32) in the cap (3) and into the radial hole (120) in the screw (1), when said hole and apertures are aligned, so as to lock the fastening.

8.  The positive-locking fastener according to claim 7, **characterized in that**:

        the nut is a twelve-sided nut defining a twelve-vertex star profile (P) with an angular period of 30°;
        the cap (3) has two pairs of openings (32); the angular sector $\varphi$ is equal to 15°;
        the angular offset $\Delta\varphi$ between the pairs of apertures (32) is 75°.

9.  A fastener according to claim 7 or claim 8, **characterised in that** the pin (4) has a curved portion adapted to conform to an outer surface of the locking portion (31) of the cap (3) to hold said pin in place.

10. A fastener according to any of claims 7 to 9, **characterised in that** the pin (4) is a spring pin.

11. A fastener according to any of claims 7 to 10, **characterised in that** a minimum radial dimension of the first part of the peripheral wall (31) is greater than a maximum radial dimension of the threaded portion (12) of the screw (1).

12. A method of operating a positive locking fastener according to any of claims 7 to 11, **characterised in that** it comprises the following steps:

        - insertion of the screw (1) into a hole previously made in a structural assembly (5) consisting of structural elements to be held together;
        - placing the nut (2) on the screw by applying a tightening torque;
        - placing the cap (3) on the clamping portion (21) of the nut (2);
        - if the radial hole (120) is not aligned with a pair of openings (32) of the cap (3), removing the cap (3) in a vertical direction, rotating the cap about its main axis in a given direction of rotation by an angle equal to the angular period $\Theta$, and then replacing the cap (3);
        - insertion of the pin (4) into the aligned openings (32) and radial hole (120).

EP 3 638 910 B1

**Figure 1A**

**Figure 1B**

20

2

P

θ = 30°

Δ

21

**Figure 2**

3

Δφ = 75°

A₂

Δ

φ = 15°

31

32

A₃

**Figure 3**

θ = 30°

$\varphi_2 = 15°$

2

20

θ = 30°    $\varphi_1 = 15°$

$A_2$

21

$A_3$

32

31

# Figure 4

**Figure 5**

**Figure 6a**

**Figure 6b**

**Figure 6c**

**Figure 6d**

**Figure 6e**

**Figure 6f**

**Figure 6g**

**Figure 6h**

**Figure 7a**

**Figure 7b**

**Figure 7c**

3

32

A$_2$

$\varphi = 30°$

Δ

**Figure 8**

$\Delta\varphi_2 = 110°$

$\Delta\varphi_1 = 40°$

$\varphi = 10°$

**Figure 9**

**Figure 10**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5360303 A

- EP 0576871 A